# EUROPEAN PATENT APPLICATION

(11) **EP 3 109 613 A1**
(43) Date of publication of application: **28.12.2016**
(21) Application number: 15174157.6
(22) Date of filing: 26.06.2015
(51) Int. Cl.: G01M 15/10, G01M 15/14, G01K 11/00

(54) **MONITORING SYSTEM AND TURBO ENGINE WITH A MONITORING SYSTEM**

(71) Applicant: Rolls-Royce Deutschland Ltd & Co KG, 15827 Blankenfelde-Mahlow (DE)
(72) Inventor: TEIA DOS SANTOS MENDES GOMES, Luis Daniel, 10115 Berlin (DE)
(74) Representative: Maikowski & Ninnemann Patentanwälte Partnerschaft mbB

(57) **Abstract**

The invention relates to a monitoring system for at least one gas containing spatial region (10) in a turbo engine (100), the at least one spatial region (10) comprising at least one reflective surface (11, 11 A, 11 B, 17A-H) and / or being bounded at least partially by at least one reflective surface (11, 11A, 11 B, 17A-H), wherein at least one first laser beam (21) of a laser system (20) is traversing the at least one spatial region (10) to be reflected by the at least one reflective surface (11, 11 A, 11 B, 17A-H) as at least one second laser beam (22) wherein a detection system (30) for the at least one second laser beam (22) determines a deviation (D) from at least one property of the at least one second laser beam (22) against a predetermined status and / or determines a measurement of at least one property of a part (15) connected to the at least one reflective surface (10). It also relates to a turbo engine (100).

## Description

The invention relates to a monitoring system with the features of claim 1 and a turbo engine with the features of claim 14.

Turbo engines are complex machines with many moving parts. To ensure the nominal operation of the turbo engine it is often required to monitor certain parameters. In some circumstances it is e.g. required to evaluate a deviation from the nominal status during operation. Deviations from the nominal status would e.g. indicate a failure or an imminent failure of the turbo engine and / or a subsystem of the turbo engine.

Therefore, efficient monitoring systems for various operation parameters of a turbo engine are required.

This is e.g. achieved by a monitoring system for at least one gas containing spatial region in a turbo engine, the at least one spatial region being bounded at least partially by at least one reflective surface. The spatial region can e.g. be completely encased by some wall or casing. The spatial region can also be partially open. In any case the bounding part of the spatial region comprises at least partially a reflective surface

The at least one reflective surface is required for at least one first laser beam of a laser system traversing the at least one spatial region to be reflected by the at least one reflective surface as at least one second laser beam. The at least one second laser beam is a reflection of the at least one first laser beam from the at least one reflective surface. A detection system detects the at least one second laser beam and determines a deviation from at least one property of the at least one second laser beam against a predetermined status and / or determines a measurement of at least one property of a part connected to the at least one reflective surface.

The monitoring system can therefore take measurements connected with the reflective surfaces as well as (and in combination with) measurements made by the laser beams traversing the at least one spatial region. An example for the first measurement would be a deformation of a bounding wall which would be detected by a change in the laser beam property. An example for the second measurement would be a change in the laser beam property due to extinction and / or diffraction caused by changes in the spatial region itself. The laser beams are forming network in the spatial region.

In one embodiment of the monitoring system the at least one gas containing spatial region comprises an encased zone of the turbo engine, a by-pass duct of the turbo engine, an exhaust zone with exhaust gases leaving the turbo engine and / or at least one further reflective surface. These are examples of spatial regions which comprise at least one reflective surface and / or which are bounded at least partially by at least one reflective surface. It is also possible, that additional reflective surfaces are provided within the spatial region.

In a further embodiment the deviation in at least one property of the at least one second laser beam from the predetermined status is a linear and / or angular displacement of the at least one second laser beam and / or a change in at least one beam property of the at least one second laser beam, in particular the intensity, the polarization, a parameter characterizing the beam quality, the pulsing frequency, modulation and / or wavelength (i.e. color). These properties can be effectively determined by the laser beams and the corresponding detection system.

Furthermore, in an embodiment of the monitoring system the detection system comprises a first detection device for determining a physical change of the at least one reflective surface, in particular a geometrical and / or a mechanical change, more particularly a mechanical deformation, a movement and / or a vibration at the at least one reflective surface. The laser beam network can detect those physical changes caused by changes in the at least one reflective surface or parts connected to the at least one reflective surface.

It is also possible that an embodiment of a monitoring system has a detection system comprising a second detection device for determining a change in the physical and / chemical property of the gas within the at least one spatial region, in particular the transparency, density and / temperature of the gas. Those detection systems can be at least partially integrated or be designed as separate units.

In a further embodiment of the monitoring system the at least one reflecting surface is part of a casing of the turbo engine, is a part of a mechanical device such as e.g. a tube in the at least one spatial region, a cavity positioned in the turbo engine, a bearing in the at least one spatial region and / or at least one mirror device positioned in the at least one spatial region.

In another embodiment of the monitoring system the laser system emits at least one first laser beam as a pulsed laser beam, a plurality of first laser beams, in particular first laser beams with different wavelengths and / or a scanning first laser beam. A scanning laser beam can e.g. be used for determining a three dimensional shape (such as a casing wall) or changes in such a shape.

Furthermore it is possible in an embodiment that the laser system comprises at least one beam splitter for the at least one first laser beam and / or the at least one second laser beam. With reflective surfaces and beam splitters complex laser networks can be set up within the turbo engine.

In another embodiment the laser system handles a plurality of first laser beams and / or second laser beams traversing the at least one spatial region in the turbo engine forming a complex laser beam network within the at least one spatial region.

In one embodiment of the monitoring system the detection device comprises a data management unit evaluating data about changes and / or deviations in at least one reflecting surface and / or the gas in the at least one spatial region to generate a signal in dependence of the evaluation, in particular to generate at least one failure mode of a component in the turbo engine, more in particular determining a rapid raise in the gas temperature as a failure mode.

To increase e.g. the redundancy in one embodiment the monitoring system uses at least two laser beams essentially in parallel in the laser beam network.

In one embodiment of the monitoring system the at least one spatial region comprises at least one structural feature (e.g. a nut, a bolt, a screw, a pattern) of a rotatable shaft with a reflective surface wherein at least one first beam of the laser system reflected by the at least one reflective surface as at least one second laser beam wherein the detection system for the at least one second laser beam determines a reflective pattern indicating the rotational speed of the at least shaft.

In a similar way at least one spatial region can comprises at least one shaft of the turbo engine with a reflective surface wherein at least one first beam of the laser system reflected by the at least one reflective surface as at least one second laser beam, wherein the detection system for the at least one second laser beam determines a reflective pattern indicating the rotational speed of the at least shaft.

Embodiments of the monitoring system can be used in connection with a temperature and / pressure measurement device.

The problem is also addressed by a turbo engine, in particular an aircraft turbo engine with at least one monitoring system according to at least one of the claims 1 to 13.

Exemplary embodiments are shown in the Figures, wherein
- Fig. 1: shows an aircraft turbo engine with an embodiment of the monitoring system;
- Fig. 2: shows a variation of the embodiment depicted in Fig. 1;
- Fig. 3: shows a cross-section of an aircraft turbo engine with a different embodiment of the monitoring system having laser beams traversing different spatial regions in an aircraft turbo engine;
- Fig. 3A: shows a detail in the signal generation in a detector system of the embodiment depicted in Fig. 3;
- Fig. 4: shows a schematic view of the monitoring of a pipe for leaks or bursts by an embodiment of the invention;
- Fig. 5: a roll out view of Zone 2 of an aircraft turbo engine with a laser beam network;
- Fig. 6: a cross-sectional view of an aircraft turbo engine with a further embodiment of the monitoring systems covering Zone 1 and 2 of an aircraft turbo engine;
- Fig. 7: a schematic view of a variation of the embodiment shown in Fig. 6 using a beam splitter;
- Fig. 8: a perspective view of a shaft system of an aircraft turbo engine monitored by an embodiment of the laser beam monitoring system;
- Fig. 9: a perspective view of a bearing which is monitored by an embodiment of the laser beam monitoring system;
- Fig. 10: a schematic view of an embodiment of a monitoring system with a temperature sensor function;
- Fig. 11: a schematic view of a further embodiment of a monitoring system with a pressure sensor function.

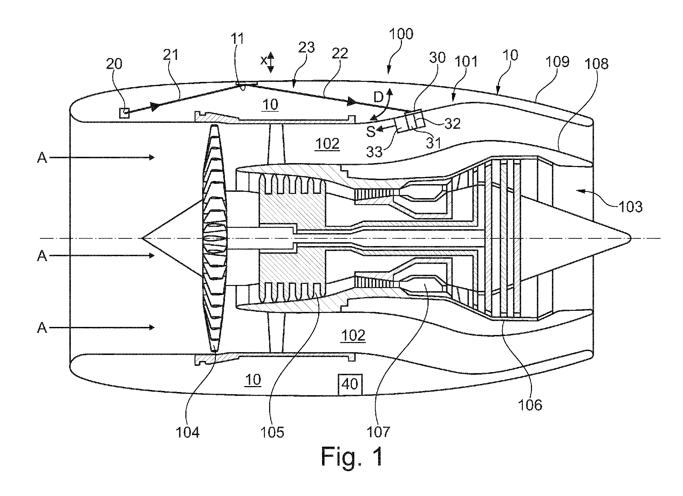

In Fig. 1 a cross-section of an aircraft turbo engine 100 is shown. It should be noted that the invention is not limited to aircraft turbo engines 100 but could also be used in connection with stationary turbo engines 100 such as e.g. gas or steam turbines used in power generation.

The turbo engine 100 comprises a fan 104 section, a compressor section 105, a combustion chamber section 106 and a turbine section 107 in a generally known way. Air A enters the front of the aircraft turbo engine 100. Accelerated exhaust leaves the aircraft turbo engine 100 in the exhaust section 103 at the rear end.

There is a wide range of designs in turbo engines 100, in particular in aircraft turbo engines 100 (e.g. turbojet, turbofan, turboprop or turbo shaft engines) so that Fig. 1 should only be understood as an example to explain an embodiment of a monitoring system working in connection with a turbo engine 100.

In the turbofan design shown in Fig. 1, an engine core 108 is surrounded by a by-pass duct 102 and a casing 109. The casing 109 comprises e.g. an electronic control unit 40 and piping which is not shown here for the sake of simplicity. The casing 109 also comprises a gas filled spatial region 10, i.e. the units (such as e.g. pipe 25, ducts, valves, tube and electrical devices) within the casing 109 are surrounded by air.

In the following, an embodiment of a monitoring system is described which can detect physical changes associated with that spatial region 10.

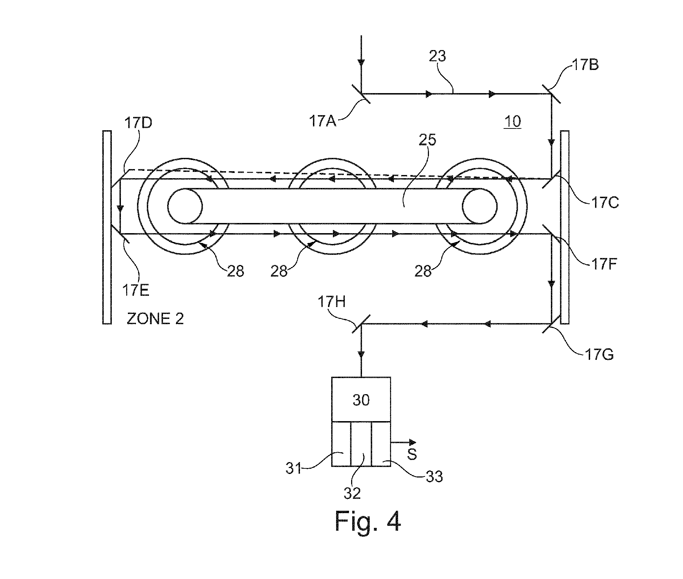

For example, the monitoring system can detect a burst pipe 25 (see e.g. Fig. 4) which will lead - among other things - to a change in temperature in the gas filled spatial region 10.

To detect that temperature change a laser system 20 emits a first laser beam 21 which is reflected by a reflective surface 11 on the inner side of the casing 109, i.e. the boundary of the spatial region 10.

A second laser beam 22, being the reflected first laser beam 21, is detected by a detection system 30. The laser beams 21, 22 form a simple laser network 23.

The laser system 20 typically comprises at least one diode laser because of the low mass and its compactness.

In particular with the laser diodes it is possible to have laser networks 23 with multiple laser beams 21, 22 wherein the laser beams 21, 22 are in parallel or they take different paths. In any case it is possible to create an improved redundancy within the monitoring system. The laser system 20 is coupled to the power supply of the turbo engine which is not shown here.

The laser system 20 and the detection system 30 are here positioned on the inner circumference of the casing 109, the reflective surface 11 is positioned on the outer circumference of the casing 109. This is one example in which the spatial region 10 is bounded at least partially by a reflective surface 11.

In all embodiments of the monitoring system described herein, the reflective surface 11 can e.g. be the unaltered inner wall of the casing 109 or a polished section of the casing 109. In addition a mirror system 17 can be used.

The laser beams 21, 22 form a simple laser beam network 23 traversing the spatial region 10 (i.e. a cavity) in the casing 109. The reflective surface 11 allows the guiding of the laser beams 21, 22 through the spatial region 10. In the following, more complex laser beam networks 23 are described.

The monitoring of a geometrical change due to a mechanical deformation X in the casing 109 is described in the following.

The first laser beam 21 is aimed towards the reflective surface 11 at the outer wall of the casing 109. If now the physical, e.g. the geometrical, property X (indicated exemplary by a double arrow in Fig. 1) of the reflective surface 11 is altered, because the shape of the casing 109 is changed, damaged or moving, the reflection of the second laser beam 22 is changed as well.

That change results in an angular and / or linear displacement D of the second laser beam 22 detected by the detection system 30 and which is evaluated by a first detection device 31. The change in the physical property X could e.g. be a small movement of casing 109 wall caused by a mechanical force or a failure. If the displacement D, i.e. the deviation in the property of the second laser beam 22, is outside a predetermined range, a data management unit 33 coupled to the detection system 30 and / or the first detection device 31 triggers a signal S which can be used in the control of the turbo engine 100 through the electronic control unit 40.

One application of the embodiment of the monitoring system would be the rapid checking of the integrity of the turbo engine 100 before starting the engine. The laser beam network 23 of the laser beams 21, 22 would be different from a predetermined status (e.g. nominal status) in case the casing 109 had been physically altered, e.g. damaged.

If a complex laser beam network 23 is used, the actual geometrical shape of the turbo engine 100 can be compared against the nominal shape. If the deviation D from the nominal status is deemed too large, the data management unit 33 would issue signal S as a warning or a signal S to prevent the operation of the turbo engine 100.

In the same way, the monitoring system with the laser beams 21, 22 can detect deviations from the nominal operating conditions (e.g. during flight) and also issue a warning and / or allow the electronic control system of the turbo engine 100 to take automatic action in response to that detected deviation D.

The monitoring system could also be used during the operation of the turbo engine 100 so that the laser beam network 23 extends through the gas filled spatial regions 10 in parts or throughout the turbo engine 100. This could involve more than one laser beam source, a plurality of reflective surfaces 11 (and / or) mirror devices 17. It could also involve active scanning laser beams (i.e. moving laser beams) which would scan the shape of the gas filled region to detect mechanical changes in the hardware and / or changes within the properties of the gas.

A further or additional application would be the detection of vibrations within the turbo engine 100. If the reflecting surface 11 is subjected to vibrations, a property of the reflected second laser beam 22 would indicate those vibrations which would be detected by the detection system 30.

Given such a laser monitoring system it would be possible to monitor the integrity and the vibrational status of the turbo engine 100 at the same time by using the same laser beams 21, 22.

The laser beams 21, 22 not only can be used to detect geometrical and / or mechanical changes in the casing 109 but alternatively or additionally changes in the gas in the spatial region 10 being traversed by the laser beams 21, 22, i.e. the laser beam network 23.

Temperature and pressure differences in the gas in the spatial region 10 result in density changes and changes of the refractive properties in the gas. Those changes alter the optical properties of the gas which can be visualized e.g. by schlieren images. The laser beams 21, 22, in particular when they are scanning a section of the spatial region 10 are affected by those changes in the physical properties of the gas. Those changes are evaluated by a second detection device 32 coupled with the detection system 30, comprising e.g. a photosensor. The detection system 30 is coupled to detection devices 31, 32 which can evaluate changes in the property of the second laser beam 22. A data management unit 33 is coupled to the detection system 30 and / or the detection devices 31, 32 to collect data and / or generate a signal S which can be used in the control of the turbo engine 100 by the electronic control unit 40.

It should be noted that the detection device 31, 32 and / or the data management unit 33 can e.g. be lumped together into one unit, i.e. the detection system 30. The separation into different entities 30, 31, 32, 33 is made here for exemplary reasons to separate the physical detection of signals in the second laser beam 22, the evaluation of those signals and the triggering of the signal S which can e.g. be used in the control of the turbo engine 100 by the electronic control unit 40. All those systems, devices and units 30, 31, 32, 33 can be partially realized in hardware (as data processing devices with data storage devices) or software. The detection system 30 comprises photoelectric sensors and amplifiers to generate appropriate signals for the monitoring and / or the control. Examples for this are given below.

The changes of the physical properties in the gas affect the traversing of the beams 21, 22 leading towards a deviation D from a predetermined (e.g. nominal) status which are evaluated by the second detection device 32 which can detect and / or evaluate changes in at least one physical and / or chemical property of the gas in the spatial region 10.

The predetermined status can e.g. be the receiving status of the second laser beam 22 under normal operating conditions, i.e. the temperatures, pressures, and / or the temperature field under nominal operating conditions of the turbo engine 100. Data representing those nominal conditions are stored as predetermined properties in the detection system 30 and / or the data management unit 33.

Any deviation D from this can trigger a signal S, e.g. a warning signal that a temperature and / or a pressure has abruptly changed due to a burst tube 25 (or pipe or duct) in the spatial region 10. The trigger signal S can be subject to certain tolerances or threshold values, i.e. some temperature variations are tolerated by the data management unit 33 without issuing a warning signal. The signal S generated by the data management unit 33 could e.g. be received by the engine controller of the turbo engine 100.

The deviation D can be described by a range of fixed allowable values, a difference from a fixed value and / or a time dependent criterion detecting e.g. a too rapid or too slow increase in temperatures.

The data management unit 33 coupled with the detection devices 31, 32, and the detection system 30 can generate the signal S which can be a warning signal or a control signal for the electronic control system of the turbine engine 100.

Alternatively or additionally, the deviation D of a property of the at least one second laser beam 22 against a predetermined status can be a property which is linked to the transparency of the gas within the spatial region 10 by the second detection device 32 coupled to the detection system 30.

The transparency of the gas can be altered e.g. by particles due to a fire or droplets due to a burst hydraulic tube 25 in the spatial region 10. If e.g. the spatial region 10 is filled with smoke or droplets, the intensity of the second laser beam 22 received by the detection system 30 would deviate from the predetermined status which is stored by the second detection device 32 or the data management unit 33. The deviation would trigger the signal S indicating that a non-nominal operating condition of the turbo engine 100 has been detected.

Depending on the sensors used in the detection system 30 and the methods used in the evaluation by the second detection device 22 other properties of the second laser beam 22 might be used alternatively or additionally to detect some deviations D.

For instance the polarization, the wavelength and / or at least one parameter describing the beam quality (e.g. beam width) can be used as a property of the second laser beam 22. If the spatial region 10 is e.g. filled with smoke particles due to a fire, the laser beams 21, 22 diffract more than in the nominal status. The laser beam 21, 22 could widen because of the diffraction and / or decrease in intensity which would be detected by the detection system 30. The dimming due to absorption might also be detected.

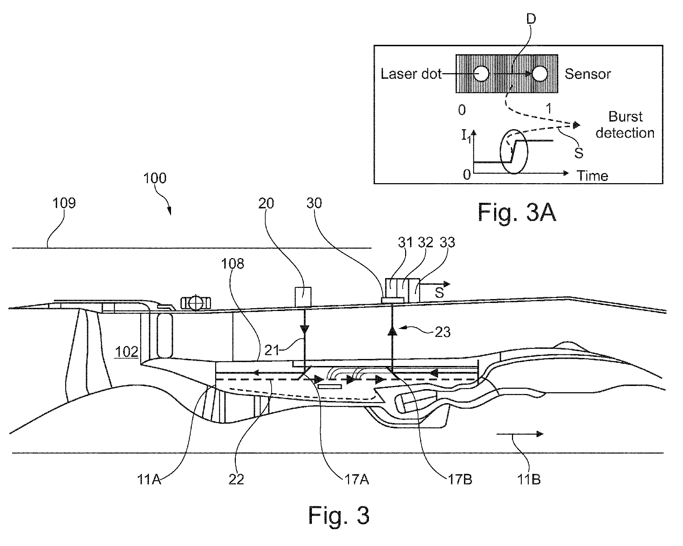

The embodiment can also work based on the optical principle of refraction. The laser beams 21, 22 are bounced back and forth through the spatial region 10 (often termed "Zone" in the context of an aircraft engine 100), as will be shown in connection with e.g. Fig. 3.

Consider now the case of a burst of a compressor stage or a cooling pipe 25. Laser beams 21, 22 passing through the suddenly heated air in the spatial region 10 would rapidly change direction as local refraction index has altered with density of the gas. The laser light is bent differently with changing refraction indexes. As a result, at the end of the laser path, the detection system 30 would "see" a rapid change D in the direction of the laser beam 22 and would trigger a burst detection alarm - the basic principle of the Burst Detection by Laser (BDL) system.

The BDL system can have a dual purpose as it detects both burst ducts and fire. In case of fire, the flame and / or smoke blocks the laser at least partially, the sensor system 30 receiving a changed (or no) laser signal, triggering a fire alarm.

With the embodiments described above it is possible to detect geometric and / or mechanical changes in the casing 109 of the spatial region 10 as well as physical and / or chemical changes in the gas filling the spatial region 10. This can be done separately but also together. With the laser beams 21, 22 the casing 109 and the gas in the spatial region 10 in the turbo engine 100 can be monitored at the same time.

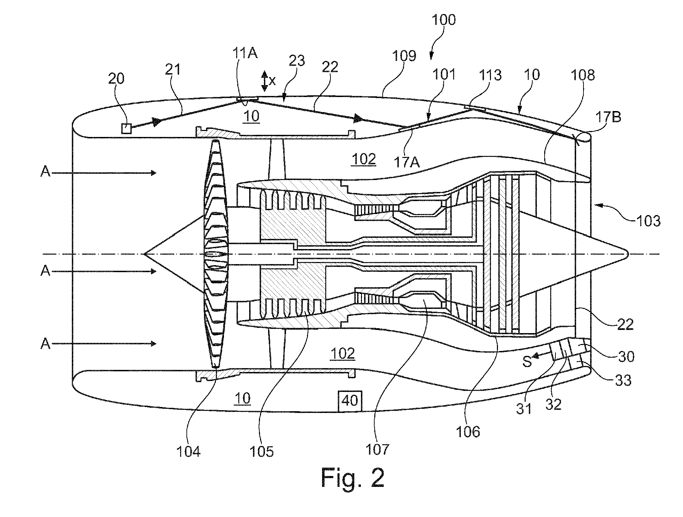

In Fig. 2 an extension of the monitoring system in the embodiment shown in Fig. 1 is described. Reference can be made to the description of Fig. 1.

In addition to the laser beam network 23 comprising laser beams 21, 22 as in Fig. 1, the embodiment of Fig. 2 comprises a mirror device 17A as a reflective surface 11 on the inner wall of the casing 109 (alternatively a reflecting surface 11 of the casing 109 itself could be used). The mirror device 17A is to be considered as a reflecting surface 11 when it not only reflects a laser beam 21, 22 but it is also fixed to the structure of the turbine engine 100. Position changes in the mirror device 17A would be representative for physical changes in that particular part of the turbo engine 100. In addition a further reflective surface 11 B is used so that the laser beam network 23 extents throughout the casing 109 in axial direction.

At the rear end a mirror device 17B is designed to reflect the second laser beam 22 through a hole or a transparent material in the casing 109 across the exhaust zone 103 of the turbo engine 100. The detection system 30 with the coupled detection devices 31, 32 and the data management unit 33 is positioned on the opposite side of the exhaust section 103.

If e.g. the optical properties of the engine exhaust are changed by e.g. by smoke particles, that change would be detected by the detections system 30 and evaluated by the second detection 32 device. The data management unit 33 would then be used to generate a signal S which could be used by the electronic control unit 40 of the turbo engine. With the embodiment shown in Fig. 2 the result of the combustion can be monitored through the exhaust. This shows that the monitoring system can also monitor spatial regions 10 which are not completely encased but at least partially open to the environment.

As will become apparent from the further embodiments, the complexity of the monitoring system can be increased by adding more laser beam 21, 22 paths and thereby forming a more complex laser beam network 23 (e.g. see Fig. 3).

Fig. 3 illustrates the monitoring system (e.g. a BDL system) implemented in the so called Zone 2 of an aircraft turbo engine 100. Fig. 3 shows the upper half of an axial cross section through an aircraft engine 100.

A laser system 20 is placed in the so called Zone 1 of the aircraft engine 100, which is a cooler environment than Zone 2. Essentially, Zone 1 covers the casing 109 as shown in Fig. 1 and 2. Zone 2 essentially comprises cavities in the core 108 of the aircraft turbo engine 100.

The laser system 20 emits a first laser beam 21 across the by-pass duct 102 into the Zone 2. The first laser beam 21 is reflected by a first mirror device 17A into a forward direction. A first reflective surface 11 A on the bounding wall of Zone 2 reflects the second laser beam 22 towards the rear part of the Zone 2. Since the second laser beam 22 can travel in a straight line in this part of the Zone 2 it hits a second reflective surface 11 B on the bounding wall towards the rear end of the Zone 2. The second reflective surface 11 B reflects the second laser beam 22 onto a second mirror device 17B and then towards the detection system 30 which is coupled to the detection devices 31, 32, and the data management system 33.

Here, the data management system 33 can trigger a signal S as described in connection with the embodiments of the monitoring systems shown in Fig. 1 and 2.

In the Zone 2 the laser beams 21, 22 bounce back and forth throughout Zone 2 via the reflective surfaces 11 A, 11 B at the front and rear wall. The complete path of the laser beams 21, 22 can be considered as a laser beam network 23 which can monitor in particular the gas in Zone 2 and the walls bounding the Zone 2. This laser beam network 23 can extend in three dimensions, covering different spatial regions 10 in and around the turbo engine 100.

In Fig. 3A it is illustrated how the detection system 30 "sees" the change in laser direction, i.e. a deviation D (or a displacement) caused by e.g. a burst duct. Here, the second laser beam 22 moves linearly from the left to the right. This displacement D is detected by the detection system 30 and the second detection unit 32. From a signal perspective change e.g. in the laser intensity I (see the jump from 0 to 1 in the small coordinate system) caused by the displacement D triggers the burst duct alarm.

With different detection units 31, 32 the monitoring system could also detect mechanical deformations if the position of at least one of the reflective surfaces 11 A, 11 B and / or the mirror devices 17A, 17B is changed. Again, this would generate a deviation from the predetermined (e.g. nominal) status since the light path of the laser network 23 would be changed. It should be noted that the mirror devices 17A, 17B are itself reflective surfaces 11. If the mirror devices 17A, 17B are sufficiently coupled with parts of the turbine engine 100, the mirror devices could be considered as further reflective surfaces 11.

The laser beam network 23 can be made to pass in the vicinity of pressurized pipes 25, in particular all pressurized cooling pipes 25, covering all possible burst duct scenarios (see Fig. 3). The laser beam network 23 can be adapted to traverse any region of Zone 2.

Fig. 4 shows an axial cross section of Zone 2 schematically with a pipe 25 showing how the laser beam network 23 would extend throughout the Zone 2. No matter, where burst duct or fire occurs, a detection will take place in detection regions 28. In Fig. 4 it is shown that the laser beam network 23 enters the Zone 2 and is reflected by mirror device 17A - 17H. The two mirror devices 17D, 17E are positioned at the forward wall of the Zone 2, two mirror devices 17C, 17F at the rear end, i.e. they are connected to the boundary walls.

The laser beam network 23 is shaped so that it runs along the air pipe 25 in the spatial region 10 of the Zone 2. If the pipe 25 bursts, the leaking hot air will alter physical properties of the gas (i.e. refraction index, density) in the spatial region 10 (i.e. Zone 2 here) which will be detected by the detection system 30 which is coupled with detection units 31, 32 and the data management unit 33. The detection and processing of the data is performed as described in connection with Fig. 1 to 3.

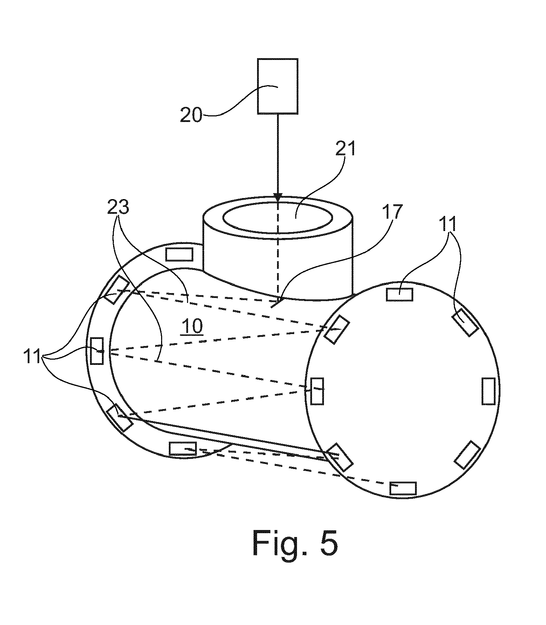

In Fig. 5 a perspective view of Zone 2 which comprises the spatial region 10. The laser system 20 outside this spatial region 20 emits a laser first beam 21 onto a mirror 17. Through repeated reflections at reflective surfaces 11 (e.g. the inner side of the casing 109) the laser beam network 23 crisscrosses the Zone 2 completely, i.e. the turbine core 108 would be radially enveloped by the laser beam network 23, i.e. it would be a three-dimensional network of laser beams 21, 22.

The laser network 23 can be made to encompass Zone 1 as well as Zone 2 by allowing the laser to travel through a small window orifice 26 in a splitter fairing tray.

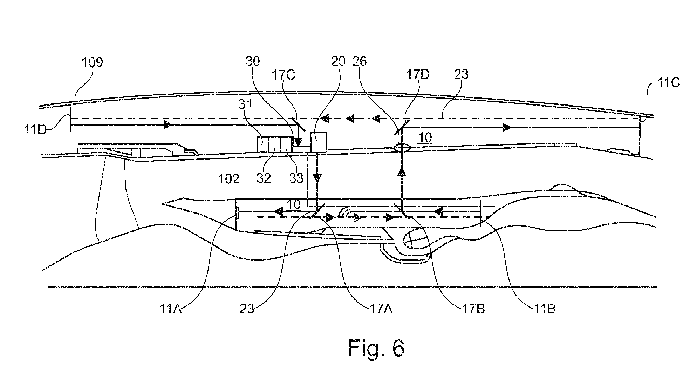

In Fig. 6 a variation of the embodiment shown in Fig. 3 is shown, so that reference can be made to the respective description. Whereas in Fig. 3 the laser beam network 23 was covering Zone 2, i.e. the spatial region 10 in Zone 2, the embodiment of Fig. 6 shows that the laser beam network 23 can be present in Zone 1 (i.e. the casing 109) as well as in Zone 2 (i.e. the core 108).

Again, the laser beams 21, 22 of the laser beam network 23 would continue bouncing in Zone 1 via a series of reflective surfaces 11C, 11D located at the front and rear walls before reaching the detection system 30 coupled to the detection devices 31, 32 and the data management unit 33. Mirror devices 17C, 17D guide the laser beam network 23. This would encompass monitoring systems in Zone 1 such as an ECS (environmental control system) burst, would flood Zone 1 with hot air.

Redundancy can be added to improve reliability. Two parallel laser systems 20 and detection systems 30 could be used. Laser beams 21, 22 from both systems could be superimposed to follow the same path.

In case of a burst or fire, both detection systems 30 should detect the same response at the sensor location (e.g. a step change in detected signal implies a burst; a degraded signal or a loss of signal means fire).

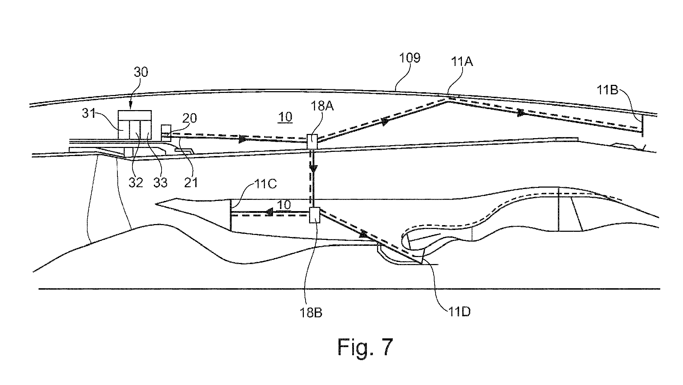

In a variation of the embodiment of Fig. 6, which is shown in Fig. 7 beam splitters 18A, 18B are used. By using beam splitters 18A, 18B two or more laser beam networks 23 can be set up in the spatial regions 10 at the same time. In the embodiment of Fig. 7 the laser system 20 emits a first laser beam 21 in the spatial region 10 in Zone 1 of the aircraft turbo engine 100. A first beam splitter 18A directs a part of the laser beam to the rear, i.e. towards the first reflective surface 11 A on the casing 109 and the second reflective surface 11 B.

From the second reflective surface 11 B the laser beam is guided back towards the detection system 30. Effectively, the laser beam has been going back and forth in the spatial region 10 in the Zone 1.

In the core 108 the second beam splitter 18B sets up a similar laser beam network with third and four reflective surfaces 11C, 11D. The reflected laser beams are transmitted by across the by-pass duct 102 to the detection system 30 with detection devices 31, 32 and a data management unit 33.

The embodiments of the monitoring systems described above were concerned with the detection of physical changes in casings 109 or the detection of material interfering with the laser beams 21, 22 or the laser beam network 23.

The same principles can be applied to further applications which all or in part can be used in connection with the embodiments described above.

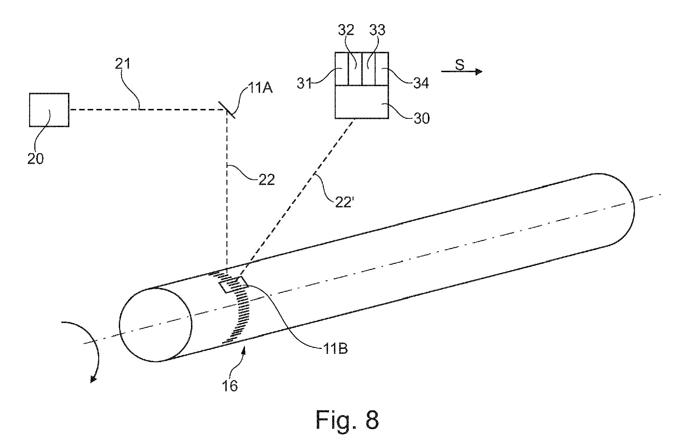

In Fig. 8 a perspective view of a part 16, i.e. a shaft of an aircraft turbo engine 100 is shown.

The laser monitoring system can in one embodiment also be used to detect the rotational speed of the turbo engine 100. A laser system 20 emits a laser beam which is reflected by a first reflective surface 11 A which is located a some boundary to a spatial region 10 the turbo engine, as shown in the previous embodiments. The reflected laser beam 22 is guided towards a second reflective surface 11 B on the rotating shaft 16. The second reflective surface reflects a laser beam 22' to a detection system 30. The path to that detection system can go via further reflective surfaces 11 or mirrors 17.

If the second laser beam 22 which is part of a laser network 23 as e.g. described in connection with one of the above embodiments is directed e.g. radially onto the first reflective surface 11 A of shaft 16 of the turbo engine 100 and is operated like a stroboscope, the rotational speed (and changes in the rotational speed) of the shaft can be measured. This shows that the laser network 23 can also be used to monitor devices in the spatial region 23. No extra laser source would be needed for this purpose. The laser beam network 23 and the reflecting surfaces on the boundaries of the spatial region 10 (not shown in Fig. 8) would just be extended - as shown in Fig. 8, 9, and 10 - for this purpose.

In a similar - not shown - embodiment, the blades of a turbine or compressor can be monitored. The detection system 30 receives the laser beam 22' reflected from the fan blades 27 or other blades.

A third detection unit 34 would evaluate the changes in the rotational speed from the received signal pattern of the laser beam 22' and the data measurement unit 33 would provide a signal S which can be recorded or used in the control of the turbo engine 100. The gas filled spatial region 10 would be the fan section 104, the compressor section or the turbine section 107.

The monitoring system is not limited to the detection of deviations against a predetermined status. The laser beams 21, 22, 22' can also measure an absolute property - here the rotational speed - of the part 16, without measuring a deviation. The part 16 comprises here at least one reflective surface 11 from which the laser beams 22, 22' can pick up data. The reflective surface 11 is connected to the part 16 so that changes in the reflective surface 11 (e.g. position or movement) carry information about the part 16.

If e.g. one of the fan blades 27, a compressor blade and / or a turbine blade shows a conspicuous vibration pattern, this would also show up in the movements of the reflective surface 11 by a changing intensity of the reflected laser beams 22. In a similar way vibrations could be picked up by monitoring the shaft movements.

The operation of a turbo engine 100 depends e.g. in part on the proper functioning of bearings 15 which take radial and / or axial loads of shafts in the turbo engine 100.

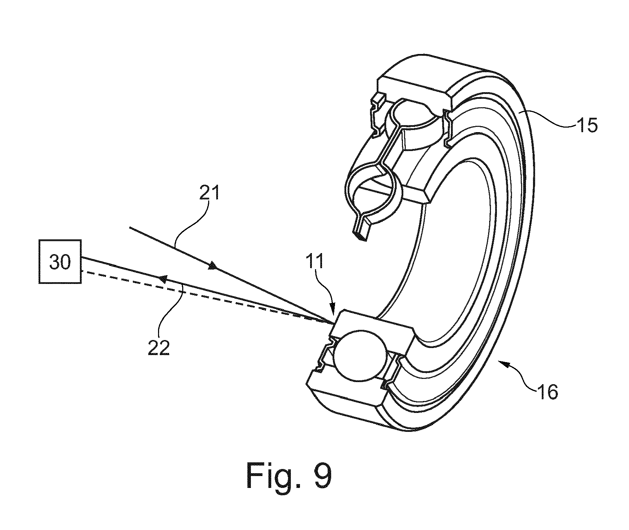

Fig. 9 shows a bearing 15 onto which a first laser beam 21 is directed. That first laser beam 21 is part of a laser beam network 23, as it was shown e.g. in Fig. 1 to 7. The casing of the bearing 15 acts as reflective surface 11. The reflected second laser beam 22 is detected by the detection system 30 as in the embodiments described above. The signal S can be generated as in the above mentioned embodiments. In many cases the bearing 15 is subjected to a certain amount of vibrations which might be considered within the design limits. If e.g. one of the bearing balls breaks, the bearing 15 will be subjected to a different vibration pattern. The vibration patterns can be picked up by the laser beams 21, 22, i.e. the second laser beam will carry information about the vibration state of the bearing 15. This data can be used as a vibration measurement as such of a physical part 15, i.e. the bearing 15. It can also be used to compare the vibration data against a predetermined status.

Hence, it is clear that the monitoring system can detect deviations and / or determine absolute measurement data of a part 16 connected with the at least one reflective surface 11 without comparing against a predetermined status.

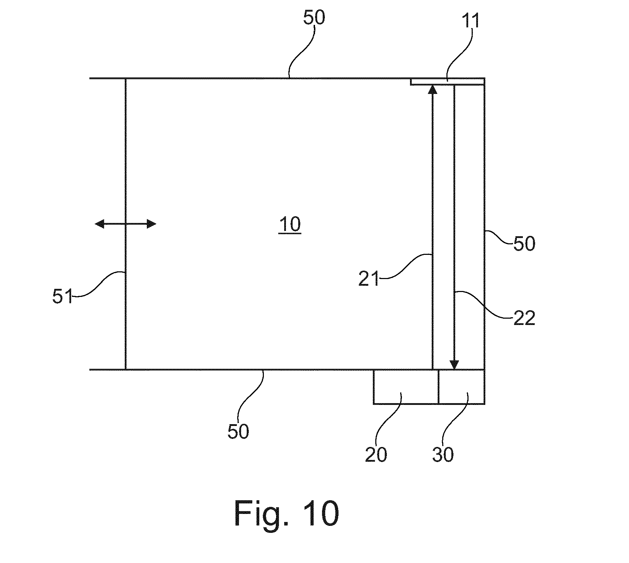

Fig. 10 shows another embodiment of the monitoring systems which comprises the function of a thermometer. As mentioned above, the transmission behavior of laser beams 21, 22 through a gas depends on the density of the gas. At relatively moderate conditions the gas density, temperature, pressure and volume are linked through the ideal gas law. If the pressure or the volume are known, the temperature can be determined through the ideal gas law. If the pressure and the temperature are known, the density can be determined through the ideal gas law.

If a gas is filled in a spatial region 10, i.e. an airtight cavity of a box with walls which are movable in a defined way. In Fig. 10 this is symbolized by a piston-like structure. It is understood, that other configurations are also possible.

In Fig. 10 the gas filled cavity 10 has three rigid walls 50 and one movable wall 51 so that the pressure in the gas filled region 10 is the same as in the environment. The mass in the gas filled region 10 is constant. If that gas filled region 10 with the temperature T is subjected to a temperature change, e.g. by a sudden increase of the thrust in the turbo engine 100, the volume of the gas filled region 10 will increase by the movable wall 51.

Since the mass is the constant, the density of the gas in the gas filled region 10 will drop.

This change in the density can be detected by a laser system 20 operating inside the gas filled region 10. The inner walls at least partially function as reflective surfaces 11. In Fig. 10 only the first laser beam 21 emitted by the laser system 20 and the reflected second laser beam 22 are shown. The detection system 30 is here positioned next to the laser system.

Any number of laser beams traversing the gas filled region 10 is possible. Also the positioning of the laser system 20 and the detection system 30 can be chosen, as long as secure reception of laser beams by the detection system 30 is possible. In any case the transmission behavior of the laser beams will be affected by gas density and the changes in gas density. This change is detected by the detection system 30. Since density is related to temperature through the ideal gas law, the temperature can be measured.

In the above-described embodiments generally only one laser system 20 and one detector system 30 were shown. In alternative embodiments more than one laser system 20 is used to generate complex 3D-laser beam networks 23. This could also improve the redundancy of the monitoring systems.

Other embodiments regarding the thermometer device are possible. In case the pressure in the gas filled region 10 is not kept constant (e.g. by having only rigid walls), the relationship of the density would be more complex, e.g. a function of pressure and volume. The temperature could be derived from calibration curves.

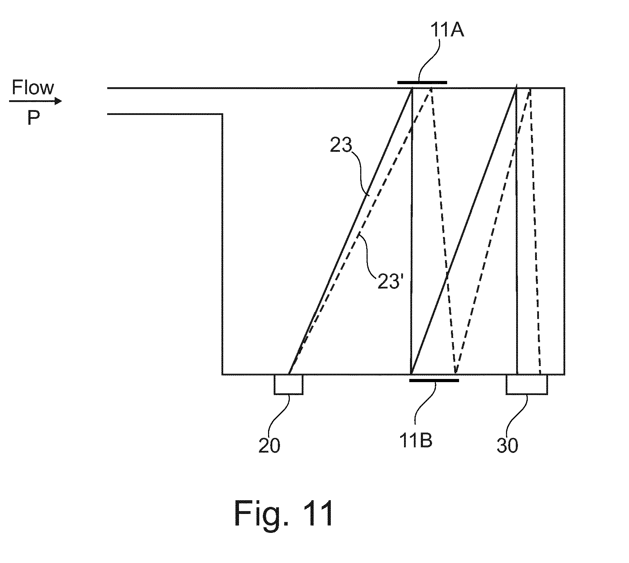

In Fig. 11 a pressure measurement device is shown, which work in an analogue way than the temperature measurement device described in context of Fig. 10. Reference can be made to the relevant description.

Pressure changes result in density changes which can be detected by a laser beam network 23 in the gas filled region 10. The change in pressure causes e.g. a change from the first laser beam network 23 into the second laser beam network 23'. This change can be used to determine the pressure. The direction of the opening - into the flow direction or orthogonal to it - determines what kind of pressure is detected, static pressure or total pressure.

In the embodiment shown, the gas filled region 10 is open directly into the direction of the fluid flow indicated by an arrow.

The embodiments of the monitoring systems can be used in the operation of the turbo engine 100 or in a test bed for the turbo engine 100. In either case, the monitoring systems allow a lightweight monitoring without cabling within the turbo engine 100 itself.

It should be understood that the above description is intended for illustrative purposes only, and is not intended to limit the scope of the present disclosure in any way. Thus, those skilled in the art will appreciate that other aspects of the disclosure can be obtained from a study of the drawings, the disclosure and the appended claims. All language of distinction and disparagement with respect to certain features is intended to indicate a lack of preference for those features, but not to exclude such from the scope of the disclosure entirely unless otherwise indicated. All methods described herein can be performed in any suitable order unless otherwise indicated herein or otherwise clearly contradicted by context. Various features of the various embodiments disclosed herein can be combined in different combinations to create new embodiments within the scope of the present disclosure. Any ranges given herein include any and all specific values within the range and any and all ranges within the given range.

**Reference numbers**
- 10: spatial region
- 11: reflective surface (11 A to 11 D)
- 15: bearing
- 16: part
- 17: mirror (17A to 17H)
- 18: beam splitter (18A to 18B)

- 20: laser system
- 21: first laser beam
- 22: second laser beam (reflected)
- 23: laser beam network

- 25: pipe, tube, duct
- 26: orifice in casing
- 27: blades, fan blades
- 28: detection region

- 30: detection system
- 31: first detection device
- 32: second detection device
- 33: data management unit
- 34: third detection device

- 40: electronic control unit

- 50: wall of a gas filled region
- 51: opening in wall

- 100: turbo engine
- 101: encased zone in a turbo engine
- 102: by-pass duct
- 103: exhaust section
- 104: fan section of aircraft turbo engine
- 105: compressor section of aircraft turbo engine
- 106: combustion chamber section of aircraft turbo engine
- 107: turbine section of aircraft turbo engine
- 108: core of aircraft turbo engine
- 109: casing of aircraft turbo engine

- A: incoming air
- D: displacement of second laser beam
- I: intensity of laser beam
- S: Signal
- X: physical change in reflective surface

## Claims

1. Monitoring system for at least one gas containing spatial region (10) in a turbo engine (100), the at least one spatial region (10) being bounded at least partially by at least one reflective surface (11, 11 A, 11 B, 17A-H), wherein at least one first laser beam (21) of a laser system (20) is traversing the at least one spatial region (10) to be reflected by the at least one reflective surface (11, 11 A, 11 B, 17A-H) as at least one second laser beam (22) wherein a detection system (30) for the at least one second laser beam (22)
a) determines a deviation (D) from at least one property of the at least one second laser beam (22) against a predetermined status and / or
b) determines a measurement of at least one property of a part (15) connected to the at least one reflective surface (10).

2. Monitoring system according to claim 1, wherein the at least one gas containing spatial region (10) comprises an encased zone (101) of the turbo engine (100), a by-pass duct (102) of the turbo engine (100), an exhaust zone (103) with exhaust gases leaving the turbo engine (100) and / or at least one further reflective surface (11, 11 A, 11 B, 17A-H).

3. Monitoring system according to claim 1 or 2, wherein the deviation in the at least one property of the second laser beam (22) against the predetermined status is a linear and / or angular displacement (D) of the at least one second laser beam (22) and / or a change in at least one beam property of the at least one second laser beam (22), in particular the intensity, the polarization, a parameter characterizing the beam quality, pulsing frequency, the modulation and / or wavelength.

4. Monitoring system according to at least one of the preceding claims, wherein the detection system (30) comprises a first detection device (31) for determining a physical change (X) of the at least one reflective surface (11, 11 A, 11 B, 17A-H), in particular a geometrical and / or a mechanical change, more particular a mechanical deformation, a movement and / or a vibration at the at least one reflective surface (11, 11 A, 11 B, 17AH).

5. Monitoring system according to at least one of the preceding claims, wherein the detection system (30) comprises a second detection device (32) for determining a change in the physical and / chemical property of the gas within the at least one spatial region (10), in particular the transparency, density and / temperature of the gas.

6. Monitoring system according to at least one of the preceding claims, wherein the at least one reflecting surface (11, 11 A, 11 B, 17A-H) is part of a casing of the turbo engine (100), is a part of a mechanical device (16) such as e.g. a tube in the at least one spatial region (10), a cavity (10) positioned in the turbo engine (100), a bearing (15) in the at least one spatial region (10) and / or at least one mirror device (17A-H) positioned in the at least one spatial region (10).

7. Monitoring system according to at least one of the preceding claims, wherein the laser system (20) emits at least one first laser beam (21) as a pulsed laser beam, a plurality of first laser beams (21), in particular first laser beams (21) with different wavelengths and / or a scanning first laser beam (21).

8. Monitoring system according to at least one of the preceding claims, wherein the laser system (20) comprises a least one beam splitter (18) for the at least one first laser beam (21) and / or the at least one second laser beam (22).

9. Monitoring system according to a least one of the preceding claims, wherein the laser system (20) handles a plurality of first laser beams (21) and / or second laser beams (22) traversing the at least one spatial region (10) in the turbo engine (100) forming a complex laser beam network (23) within the at least one spatial region (10).

10. Monitoring system according to at least one of the preceding claims, wherein the detection device (30) comprises a data management unit (33) evaluating data about changes and / or deviations (D) in at least one reflecting surface (11) and / or the gas in the at least one spatial region (10) to generate a signal (S) in dependence of the evaluation, in particular to generate at least one failure mode of a component in the turbo engine (100), more in particular determining a rapid raise in the gas temperature as a failure mode.

11. Monitoring system according to at least one of the preceding claims, wherein at least two laser beams (21, 22) essentially in parallel are used in a laser beam network (23).

12. Monitoring system according to at least one of the preceding claims, wherein the at least one spatial region (10) comprises at least one structural feature of a rotatable shaft with a reflective surface (11) wherein at least one first beam (21) of the laser system (20) reflected by the at least one reflective surface (11) as at least one second laser beam (22) wherein the detection system (30) for the at least one second laser beam (22) determines a reflective pattern indicating the rotational speed of the shaft.

13. Monitoring system according to at least one of the preceding claims, wherein the system is part of a temperature and / or pressure measurement device.

14. Turbo engine, in particular an aircraft turbo engine, with at least one monitoring system according to at least one of the claims 1 to 13.
